**Europäisches Patentamt**

**European Patent Office**

**Office européen des brevets**

(19)

(11) Numéro de publication: **0 189 338**
**B1**

(12)

# FASCICULE DE BREVET EUROPEEN

(45) Date de publication du fascicule du brevet:
**12.04.89**

(51) Int. Cl.⁴: **B 60 K 41/22**

(21) Numéro de dépôt: **86400028.6**

(22) Date de dépôt: **08.01.86**

(54) **Dispositif de détection de changement de vitesse pour la commande d'un embrayage associé à une boite de vitesses.**

(30) Priorité: **09.01.85 FR 8500243**

(43) Date de publication de la demande:
**30.07.86 Bulletin 86/31**

(45) Mention de la délivrance du brevet:
**12.04.89 Bulletin 89/15**

(84) Etats contractants désignés:
**DE GB IT**

(56) Documents cités:
**DE-A- 2 645 145**
**FR-A- 1 075 404**
**FR-E- 66 197**
**GB-A- 2 058 963**
**US-A- 4 158 404**

(73) Titulaire: **VALEO, 64 Avenue de la Grande Armée,**
**F-75017 Paris (FR)**

(72) Inventeur: **Grunberg, Pierre, 10, Villa de Cronstadt,**
**F-75019 Paris (FR)**
Inventeur: **Pankowiak, Christian, 11, rue du Moutier,**
**F-93400 Saint Ouen (FR)**

(74) Mandataire: **CABINET BONNET-THIRION, 95 Boulevard**
**Beaumarchais, F-75003 Paris (FR)**

ACTORUM AG

## Description

L'invention concerne la commande d'un système de manœuvre automatique d'un embrayage à partir de la timonerie de manœuvre d'une boîte de vitesses associée à cet embrayage. Elle s'applique notamment mais non exclusivement au cas de véhicules automobiles.

Ainsi qu'on le sait un système de manœuvre automatique pour embrayage est un système adapté à manœuvrer par lui-même un embrayage dans le sens de l'engagement (transmission de couple) ou du désengagement (interruption de la transmission de couple) et dont la mise en œuvre est commandée par un dispositif de commande adapté à lui appliquer ou non un signal d'activation. Le plus souvent, un tel système comporte un moyen de manœuvre tel qu'un moteur qui reçoit, ou non, un signal d'activation, par exemple de type électrique.

On connaît déjà, d'après le brevet FR-1 075 404 demandé de 23 Février 1953 ou son addition FR-66 197 demandée le 13 Julliet 1954, un dispositif de commande, pour l'activation et la déactivation d'un système de manœuvre automatique d'embrayage, constitué par un levier de changement de vitesse du type «levier cassé». Le levier se compose de deux tronçons globalement alignés, dont un tronçon de manœuvre soumis à l'action d'un unsager et un tronçon de commande relié à une boîte de vitesses par une timonerie de manœuvre appropriée. Le tronçon de manœuvre admet un débattement vis-à-vis du tronçon de commande; ces deux tronçons comportent deux conducteurs électriques respectifs adaptés à venir établir un contact (ou au contraire le couper) lorsque le tronçon de manœuvre s'incline par rapport au tronçon de commande sous l'action d'un usager.

En fait les dispositifs de commande d'embrayage de ce type présentent des inconvénients, celui notamment de provoquer en pratique un désengagement de l'embrayage dès que le levier de changement de vitesse est sollicité, et ce, quel que soit notamment le sens de la sollicitation: Il peut en résulter des opérations intempestives de désengagement qui peuvent se révéler préjudiciables à la bonne tenue de l'embrayage, à la sécurité et au confort dans le cas d'un véhicule automobile. En outre, dans ces dispositifs, la fin du désengagement de l'embrayage est généralement contrôlée avec une précision insuffisante pour assurer des changements de vitesse avec toute la souplesse désirée.

Les documents DE 2 645 145 et US 4 158 404 proposent des systèmes dont la commande n'est adaptée à agir que lors d'une sollicitation du levier de chagement de vitesse dans le sens convenable. Cependant, dans ces systèmes, les signaux de confirmation sont élaborés à partir d'une pluralité de composants électromécaniques (interrupteurs) couplés à un arbre de commande. L'agencement est donc compliqué et coûteux et manque de fiabilité. L'invention vise à palier cet inconvénient.

Les caractéristiques du préambule de la revendication 1 sont connues de l'un ou l'autre des documents précités.

L'invention propose à cet effet un dispositif de détection d'un effort dans une timonerie de manœuvre d'une boîte de vitesses, destiné à piloter un système de manœuvre automatique d'un embrayage associé à cette boîte de vitesse en sorte de permettre des changements de vitesses au sein de la boîte de vitesses, cette timonerie comportant un arbre de passage de vitesses, dans la boîte de vitesses, mobile en rotation entre deux positions limites correspondant respectivement à l'engagement de vitesses différentes ainsi que, faisant partie du dispositif de détection d'effort, un élément, déformable de timonerie, dit élément cassé, mobile entre deux positions limites correspondant aux positions limites de l'arbre de passage et comportant deux tronçons attelés élastiquement l'un à l'autre par des moyens de rappel élastique tendant à les ramener en une configuration neutre, ce dispositif de détection comportant en outre un détecteur de parité de vitesse adapté à prendre un état de parité représentatif de la position de l'arbre de passage de vitesses, qui varie selon que cet arbre de passage est en l'une ou l'autre de ses positions limites, un détecteur de sens d'effort associé à l'élément cassé et adapté à prendre un état représentatif de la configuration de cet élément cassé, qui est différent selon que cet élément cassé est sollicité en l'un ou l'autre de deux sens opposés de référence correspondant respectivement au passage de cet élément cassé de l'une à l'autre de ses positions limites, et reciproquement, ainsi qu'un circuit de traitement auquel sont reliés les détecteurs de parité et de sens d'effort et qui est adapté à activer le système de manœuvre automatique de l'embrayage, en sorte de désengager ce dernier, lorsque l'élément cassé est sollicité dans un sens approprié pour déplacer l'arbre de passage vers une position limite inoccupée, dispositif caractérisé en ce que ledit détecteur de parité précité comporte un flasque formant projection excentrée, fixé sur l'arbre de passage de vitesses et un potentiomètre ou moyen de mesure d'angle analogue, couplé audit flasque pour faire correspondre des zones de position de réglage dudit potentiomètre aux positions possibles dudit arbre de passage.

Un dispositif de détection d'effort selon l'invention est donc adapté à connaître un effort appliqué au levier de vitesse, en amont de la timonerie de manœuvre, dans un sens adapté à provoquer effectivement un changement de vitesse, et à n'activer le système de manœuvre automatique de l'embrayage que dans ce cas là. On notera que ce dispositif est en outre adapté à n'assurer un réengagement de l'embrayage qu'à l'arrivée de l'arbre de passage en une position limite jusque là inoccupée puisque ce n'est qu'au-delà que l'effort appliqué à l'élément cassé cesse d'être adapté à déplacer l'arbre de passage vers une position inoccupée.

Le détecteur de sens d'effort est avantagesement formé de trois conducteurs reliés à trois plots dont l'un, porté par l'un des tronçons, est disposé entre les deux autres, portés par l'autre tronçon; ces trois conducteurs constituent conjointement un interrupteur à trois fils dont l'état est représentatif de la configuration relative des deux tronçons de l'élément cassé.

L'élément cassé est, un principe, l'un quelconque des éléments que comporte la timonerie de manœuvre de la boîte de vitesses. L'invention préconise toutefois qu'il s'agisse du levier lui-même, comme dans les documents FR-1 075 404 et FR-66 197 précités, ou de l'élément qui lui succède, lequel est mobile en translation.

En regard des dessins annexés:
   - la figure 1 est un schéma synoptique d'un dispositif de détection d'effort;
   - la figure 2 est une vue en coupe montrant un détail d'une variante du levier cassé de la figure 1;
   - la figure 3 est une vue de face du détecteur de parité de vitesse de la figure 1;
   - la figure 4 est un schéma synoptique d'un dispositif de détection d'effort comportant un élément cassé mobile en translation;
   - la figure 5 est une vue éclatée en perspective d'un élément cassé similaire à celui de la figure 4; et
   - la figure 6 représente un détecteur de parité de vitesse selon l'invention.

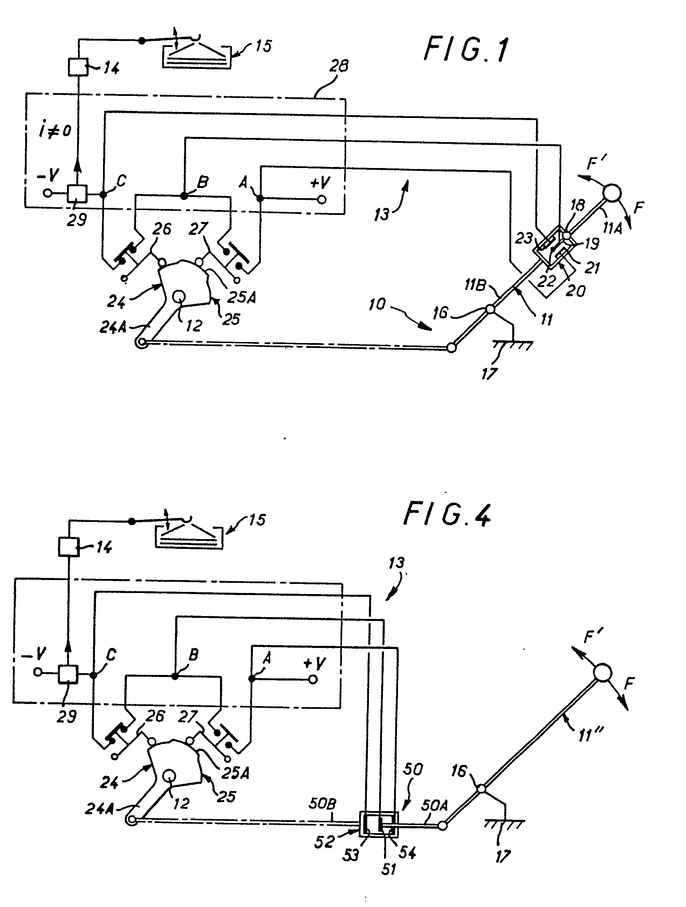

La figure 1 représente de façon schématique une timonerie de manœuvre 10 comportant en amont un levier de vitesse 11, et aboutissant en aval à un arbre de passage 12 que comporte une boîte de vitesses (non représentée), cet arbre étant mobile en rotation entre deux positions limites correspondant respectivement à l'engagement de vitesses différentes dans cette boîte de vitesses.

A cette timonerie 10 est associé un dispositif de détection d'effort, noté 13 dans son ensemble, adapté à piloter un système de manœuvre automatique 14 adapté à commander en désengagement ou en réengagement un embrayage (schématisé en 15) en sorte de permettre des changements de vitesses au sein de la boîte de vitesses.

De manière connue ce dispositif de détection d'effort comporte un élément déformable de timonerie, le levier 11 en l'occurrence, lequel comporte un tronçon amont 11A, destiné à être manœuvré par un unsager et un tronçon aval 11B. Ce levier cassé 11 est monté pivotant en 16, par son tronçon aval, sur un châssis 17 entre deux positions limites correspondant aux positions limites de l'arbre de passage. Les tronçons 11A et 11B admettent un débattement angulaire relatif grâce à une articulation 18. Le tronçon amont 11A comporte un doigt 19 qui pénètre à l'intérieur d'un logement 20 porté par le tronçon aval 11B.

L'élément cassé 11 porte un détecteur de sens d'effort adapté á prendre un état représentatif de la configuration de cet élément cassé, qui est différent selon que l'élément cassé est sollicité en l'un ou l'autre de deux sens opposés de référence, correspondant respectivement au passage de cet élément cassé de l'une à l'autre de ses deux positions limites et réciproquement. Ces sens de référence sont situés dans le plan de la figure 1 et sont notés F et F'.

Dans l'exemple représenté à la figure 1 ce détecteur de sens d'effort comporte trois conducteurs reliés à trois plots 21, 22 et 23 fomrant conjointement un interrupteur à trois fils adapté à établir deux contacts 21–22 et 22–23. Le plot 22 est porté par le doigt 19 du tronçon amont 11A tandis que les plots 21 et 23 sont disposés dans le logement 20 de façon symétrique par rapport au plot 22.

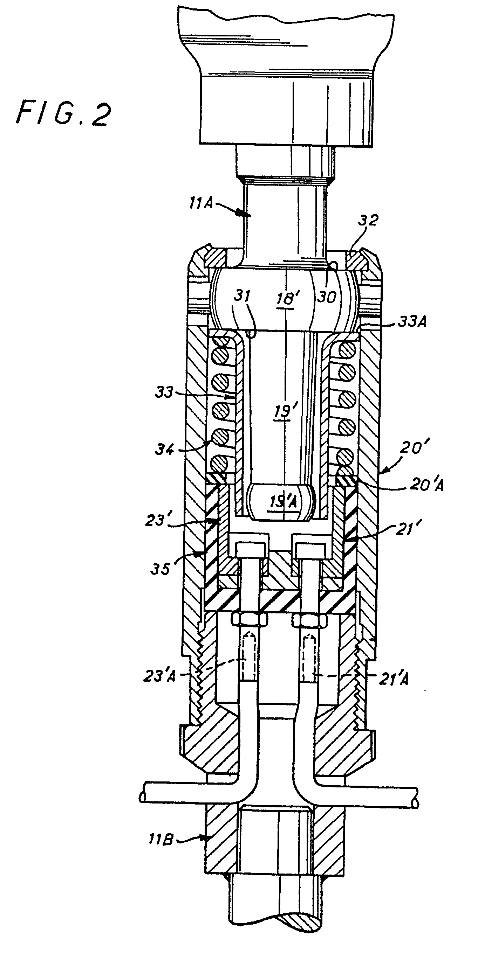

En pratique, ainsi que cela apparaît à la figure 2 les tronçons 11A et 11B du levier cassé 11 sont attelés élastiquement par des moyens les rappelant en une configuration neutre d'alignement, mais ces moyens ne sont pas représentés sur cette figure 1 pour des raisons de clarté. L'interrupteur formé par les plots 21 à 23 peut prendre trois états selon que le tronçon amont subit un effort faible ou nul (les plots sont tous séparés), un effort dans le sens de la flèche F' (le contact 21/22 est établi), ou un effort dans le sens de la flèche F (le contact 22/23 est établi).

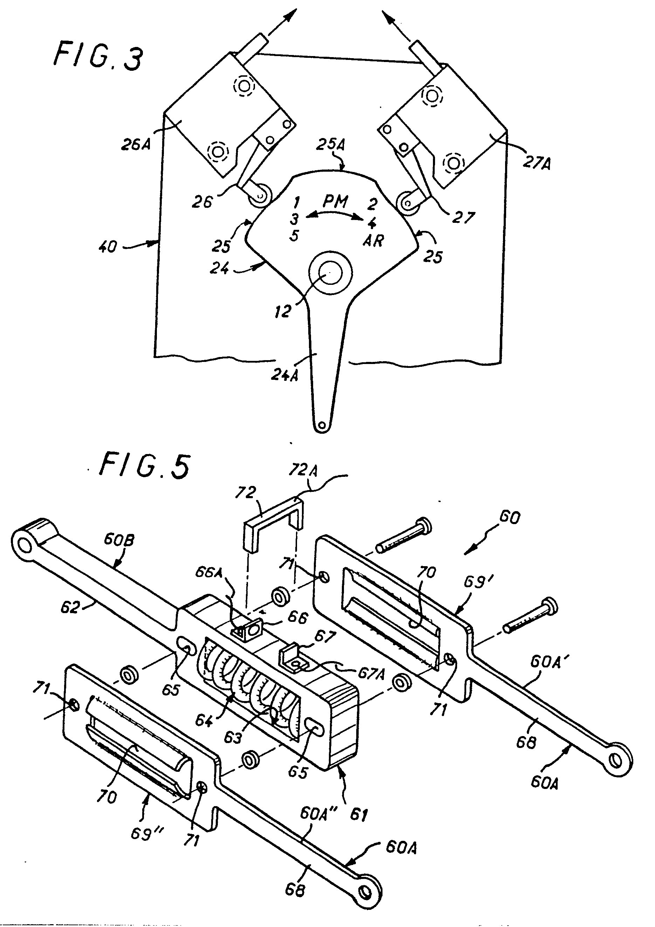

Le dispositif de détection d'effort 13 comporte en outre un détecteur de parité de vitesse adapté à prendre un état de parité représentatif de la position de l'arbre de passage de vitesses qui varie selon que cet arbre de passage est en l'une ou l'autre ou aucune de ses positions limités. Dans l'exemple de la figure 1 ce détecteur de parité de vitesse est fixé sur une extrémité de l'arbre de passage 12 (voir aussi la figure 3). Il est constitué d'un flasque transversal 24 comportant avantageusement un bras 24A qui est attelé au reste de la timonerie de manœuvre; par sa tranche à l'opposé de ce bras, ce flasque forme une came 25 contre laquelle prennent appui deux palpeurs 26 et 27 décalés angulairement vis-à-vis de l'arbre de passage en sorte de détecter, ici par enfoncement par action de la came 25, la venue de cette arbre de passage en l'une ou l'autre de ses positions limités. Par convention, on admettra que le palpeur 26 correspond à des vitesses impaires tandis que le capteur 27 correspond à des vitesses paires. Dans le cas représenté à la figure 1, le palpeur 26 est en une configuration dégagée tandis que le palpeur 27 est en une configuration enfoncée du fait d'une saillie 25A que présente la tranche du flasque 24.

Dans l'exemple de la figure 1 les palpeurs 26 et 27 sont du type rupteurs à contacts à ouvertures; le palpeur 26 est «fermé» tandis que le palpeur 27 est en un état «ouvert».

Le dispositif de détection d'effort 13 de la figure 1 comporte en outre un circuit de traitement auquel sont reliés le détecteur de sens d'effort 21-22-23 et le détecteur de parité de vitesse 24-25-26-27. Ce circuit de traitement, noté 28 dans son ensemble, est adapté, en fonction de l'état des détecteurs de parité de vitesse et de sens d'effort, à activer le système 14 de manœuvre automatique de l'embrayage 15, en vue d'un désengagement de ce dernier, lorsque l'élément cassé 11 est sollicité dans un sens approprié pour déplacer l'arbre de passage 12 vers une position limite jusque là inoccupée.

Dans sa version très simplifiée de la figure 1 ce circuit 28 est un circuit électrique relié aux plots 21 à 23 et aux palpeurs 26 et 27. Les palpeurs sont montés en série entre deux bornes + et − entre lesquelles est appliqué une différence de potentiel tandis que les plots 21, 22 et 23 sont reliés en des points A, B et C situés respectivement près de la borne +, entre les palpeurs 26 et 27, et près de la borne −. Un détecteur de courant 29 est monté entre le point C et la borne − et est adapté à délivrer un signal d'activation au système 14 lorsque le courant qui le traverse est non nul.

On peut vérifier qu'un effort appliqué au tronçon 11A du levier cassé dans le sens de la flèche F a pour effet, du point de vue mécanique, de maintenir l'arbre de passage 12 dans sa position. Or un tel effort fait que le contact 22/23 s'établit, ce qui ferme le circuit entre B et C; mais aucun courant ne passe entre A et B, ni au travers du contact 21/22, ni au travers du palpeur 27; il n'y a donc aucun courant qui traverse le détecteur 29 et le système 14 n'est pas activé, ce qui correspond au résultat recherché.

Si par contre on sollicite le levier cassé dans le sens de la flèche F', le contact 21/22 s'établit et permet un passage de courant entre A et B; comme le circuit est fermé entre B et C via le palpeur 26, un courant traverse le détecteur 29 qui active le système: cela correspond également au résultat recherché.

La figure 2 représente en détail une variante de la jonction des tronçons 11A et 11B du levier cassé. L'articulation 18' de ces tronçons est constituée par une rotule portée par le tronçon 11A et délimitée par un épaulement supérieur 30 et un épaulement inférieur 31. L'épaulement 30 vient en appui contre une portée annulaire transversale 32 du logement 20' porté par le tronçon aval 11B, tandis que l'épaulement 31 vient axialement en appui sur une collerette transversale 33A d'une douille conductrice 33. Cette douille est montée avec jeu dans le logement 20' et sa collerette est soumise à l'action d'un ressort 34 prenant axialement appui sur une rondelle 20'A solidaire du logement 20', dans laquelle la douille 33 est également montée à jeu. Le ressort 34, par l'intermédiaire de la douille, tend à maintenir l'épaulement 30 de la rotule appliqué contre la portée annulaire 32 du logement 20' et assure donc une fonction de rappel élastique des tronçons 11A et 11B en une configuration neutre d'alignement. Le doigt 19', par lequel se prolonge le tronçon 11A au delà de la rotule 18', est engagé avec jeu dans la douille 33 et se termine par une partie renflée 19'A. Dans le logement 20', sous la rondelle 20'A sont disposées deux lames de contact 21' et 23' fixées par des vis dans un cylindre isolant 35. Ces vis assurent une liaison électrique entre les lames 21' et 23' et des fils 21'A et 23'A, respectivement.

Lorsqu'un effort dans le plan de la figure 2 est appliqué au tronçon 11A, l'épaulement 30 de la rotule 18' s'incline par rapport à la portée annulaire 32 tandis que l'épaulement 31 reste en contact avec la collerette 33A de la douille 33, laquelle s'incline jusqu'à venir en contact vers l'une ou l'autre des lames 21' ou 23'. Si l'effort se poursuit, le doigt 19' s'incline à son tour par rapport à la douille 33 jusqu'à la toucher par sa partie renflée. Le doigt 19' possède cette liberté d'inclinaison afin qu'un effort sur celui-ci, après établissement du contact électrique, ne détériore pas ce dispositif.

En pratique, pour des raisons de sécurité, le tronçon 11A est avantageusement mis à la masse, par l'intermédiaire du tronçon 11B, de manière à éviter que l'utilisateur n'ait à subir des décharges électriques lorsqu'il touche le levier 11. Il en résulte une modification appropriée du circuit de traitement associé.

En fait ce circuit de traitement comporte avantageusement un microprocesseur qui traite, après mise en forme, les signaux issus des divers détecteurs.

La structure du détecteur de parité de vitesse de la figure 1 est montrée à plus grande échelle à la figure 3. On y observe que les palpeurs 26 et 27 sont tous deux en l'état déployé lorsque l'arbre de passage est en configuration médiane de point mort. Le flasque 24 est monté sur une extrémité de l'arbre de passage qui sort du carter 40 de la boîte de vitesses. Sur ce carter sont fixés les boîtiers 26A et 27A des palpeurs.

La figure 4 représente une variante de la figure 1 dans laquelle l'élément cassé n'est plus le levier 11'' mais un élément de timonerie 50 qui le suit immédiatement. Cet élément est mobile en translation. Cet élément se décompose en deux tronçons amont 50A et aval 50B attelés éalstiquement (par des moyens non représentés). Dans l'exemple simplifié de cette figure 4 l'élément 50A est une tige terminée par un plateau 51 coulissant dans un cylindre 52 solidaire du tronçon 50B. Le cylindre comporte sur ses faces transversales deux plots conducteurs 53 et 54 qu'un plot (non représenté) porté par le plateau 51 sur ses deux faces peut venir toucher respectivement, lorsque la tige 50A vient en l'une ou l'autre de ses positions extrêmes dans le logement. Ces plots 51, 53 et 54 forment conjointement, comme précédement, un interrupteur à trois fils et le fonctionnement du dispositif de la figure 4 se déduit aisément de celui de la figure 1.

La figure 5 représente une variante de réalisation plus élaborée de l'élément cassé. Cet élément cassé 60 comporte un élément aval 60B comportant un cadre épais allongé 61 relié à une tige 62. Le cadre comporte une ouverture 63 adaptée à recevoir un ressort précontraint 64. Dans les côtés courts du cadre 61 sont ménagés des alésages 65 allongés parallèlement à la tige 62. Sur la tranche d'un grand côté de ce cadre sont fixées des lames 66 et 67 connectées à des fils 66A et 67A. L'élément amont 60A de l'élément cassé 60 se décompose en deux flasques 60A' et 60A'' adaptés à encadrer transversalement l'élément aval 60B. Ces flasques comportent des barres 68 reliées à des plaques 69' et 69'' dans lesquelles des ouvertures en I, 70, ont été découpées puis embouties en sorte de pouvoir, après rapprochement transversal de part et d'autre de la fenêtre 63 du tronçon aval, maintenir le ressort 64 dans cette fenêtre. Ces plaques comportent des alésages 71 destinés à recevoir des entretoises adaptées à solidariser ces plaques de part et d'autre du cadre 61 du tronçon aval 60B en traversant ce dernier à la faveur des alésages allongés 65. Un cavalier 72 formant lame pour contact muni d'un fil 72A est fixé aux deux plaques 69' et 69'' en sorte de venir s'interposer entre les lames 66 et 67. Des éléments isolants sont bien sûr prévus pour assurer une isolation appropriée des diverses lames des contacts.

La description qui précède ne révèle pas l'invention comme décrit dans la revendication 1 parce que le détecteur de parité de vitesse montré dans les figures 1, 3 et 4 ne contient pas les caractéristiques essentielles de l'invention.

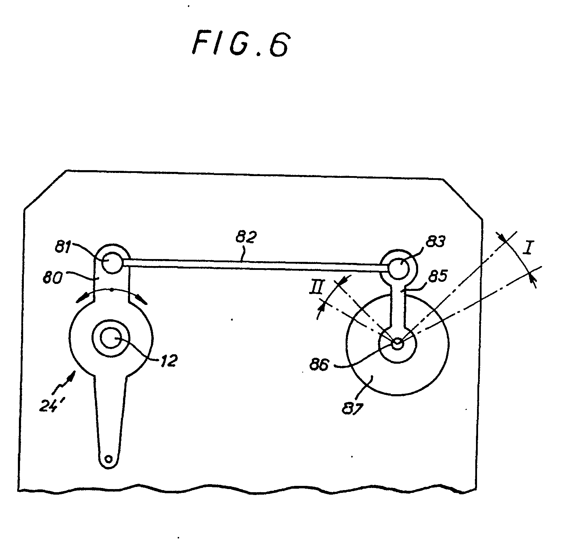

La figure 6 illustre un détecteur de parité selon l'invention dans laquelle les palpeurs de la figure 3 sont remplacés par un potentiomètre ou dispositif de mesure d'angle analogue. Plus précisément, le flasque 24' ne comporte plus de came mais simplement une projection excentrée 80 articulée en 81 à une extrémité d'une biellette 82. L'autre extrémité de la biellette est articulée en 83 à un levier 85 solidaire de l'axe 86 du potentiomètre 87. Avec cet agencement, la position angulaire du curseur du potentiomètre devient représentative de la position de l'arbre de passage 12. Par exemple, une mesure de courant ou de tension correspondant à une position du curseur dans la zone I indiquera une vitesse paire ou la marche arrière, une mesure de courant ou de tension correspondant à une position du curseur dans la zone II indiquera une vitesse impaire et une mesure de courant ou de tension correspondant à une position du curseur entre ces deux zones, sera représentative du point mort.

**Revendications**

1. Dispositif de détection d'un effort dans une timonerie de manœuvre (10) d'une boîte de vitesses, destiné à piloter un système de manœuvre automatique d'un embrayage (15), associé à cette boîte de vitesses en sorte de permettre des changements de vitesses au sein de la boîte de vitesses, cette timonerie comportant un arbre de passage de vitesses (12), dans la boîte de vitesses, mobile en rotation entre deux positions limites correspondant respectivement à l'engagement de vitesses différentes ainsi que, faisant partie du dispositif de détection d'effort, un élément déformable de timonerie, dit élément cassé (11, 50, 60) mobile entre deux positions limites correspondant aux positions limites de l'arbre de passage et comportant deux tronçons attelés élastiquement l'un à l'autre par des moyens de rappel élastique tendant à les ramener en une configuration neutre, ce dispositif de détection comportant en outre un détecteur de parité de vitesse, adapté à prendre un état de parité représentatif de la position de l'arbre de passage des vitesses, qui varie selon que cet arbre de passage est en l'une ou l'autre de ses positions limites, un détecteur de sens d'effort (21–23; 21', 23', 19'A; 51, 53, 54; 66, 67, 72) associé à l'élément cassé (11, 50, 60) et adapté à prendre un état représentatif de la configuration de cet élément cassé qui est différent selon que cet élément cassé est sollicité en l'un ou l'autre de deux sens opposés de référence, correspondant respectivement au passage de cet élément cassé de l'une à l'autre de ses positions limites et réciproquement, ainsi qu'un circuit de traitement (28) auquel sont reliés les détecteurs de parité et de sens d'effort et qui est adapté à activer le système de manœuvre automatique de l'embrayage, en sorte de désengager ce dernier, lorsque l'élément cassé est sollicité dans un sens approprié pour déplacer l'arbre de passage vers une position limite inoccupée, dispositif caractérisé en ce que le détecteur de parité précité comporte un flasque (24') formant projection excentrée (80), fixé sur l'arbre de passage de vitesses (12) et un potentiomètre (87) ou moyen de mesure d'angle analogue, couplé audit flasque pour faire correspondre des zones de position de réglage (I, II) dudit potentiomètre aux positions possibles dudit arbre de passage.

2. Dispositif selon la revendication 1, caractérisé en ce que le détecteur de sens d'effort comporte trois plots de contact (21–23; 21', 23', 19'A; 51, 53, 54; 66, 67, 72) répartis sur les deux tronçons de l'élément cassé en sorte de constituer un interrupteur à trois fils.

3. Dispositif selon la revendication 2, caractérisé en ce que l'élément cassé est le levier de vitesses (11) disposé en amont de la timonerie de manœuvre de la boîte de vitesses.

4. Dispositif selon la revendication 2, caractérisé en ce que l'élément cassé est un élément mobile en translation disposé immédiatement en aval du levier de vitesses dans la timonerie de manœuvre de la boîte de vitesses.

**Patentansprüche**

1. Vorrichtung zur Feststellung einer Beanspruchung in einem Schaltgestänge (10) eines Getriebes, bestimmt zur Steuerung eines automatischen Betätigungssystems für eine mit diesem Getriebe verbundene Kupplung (15) in einer Weise, dass eine Umschaltung der Gänge im Innern des Getriebes stattfinden kann, wobei dieses Gestänge eine Schaltungsdurchtrittswelle (12) innerhalb des Getriebes enthält, die drehbar zwischen zwei Endstellungen angeordnet ist, welche jeweils der Einrückung der verschiedenen Gänge entsprechen, sowie, als Bestandteil der Vorrichtung zur Feststellung von Beanspruchungen, ein verformbares Gestängeelement, welches als Bruchelement (11, 50, 60) bezeichnet wird und zwischen zwei Endstellungen bewegt werden kann, die den Endstellungen der Durchtrittswelle entsprechen, und mit zwei Abschnitten, die elastisch miteinander durch elastische Rückholvorrichtungen verbunden sind, welche sie in eine neutrale Konfiguration zurückbringen, wobei diese Vorrichtung ausserdem ein Gerät zur Feststellung gleicher Geschwindigkeiten (détecteur de parité de vitesse) enthält, welches dazu geeignet ist, einen für die Stellung der Durchtrittswelle repräsentativen Gleichheitszustand aufzunehmen, der je nach der entsprechenden Endstellung dieser Durchtrittswelle unterschiedlich ist, ein Gerät zur Feststellung der Beanspruchungsrichtung (21–23; 21′, 23′, 19′A; 51, 53, 54; 66, 67, 72), verbunden mit dem Bruchelement (11, 50, 60) und geeignet zur Aufnahme eines für die Konfiguration dieses Bruchelements repräsentativen Zustandes, der je nach Beanspruchung dieses Elements in der einen oder der anderen der einander entgegengesetzten Bezugsrichtung unterschiedlich ist und jeweils dem Übergang dieses Bruchelements aus der einen in die andere Endposition und umgekehrt, entspricht, sowie eine Verarbeitungsschaltung (28), an die die Geräte zur Feststellung gleicher Geschwindigkeit und zur Feststellung der Beanspruchungsrichtung angeschlossen sind und die geeignet ist, das automatische Kupplungsbetätigungssystem in der Weise zu aktivieren, dass die Kupplung ausgerückt wird, wenn das Bruchelement in einer entsprechenden Richtung beansprucht wird, um die Durchtrittswelle in eine freie Endstellung zu verlagern, dadurch gekennzeichnet, dass das vorgenannte Gerät zur Feststellung der gleichen Geschwindigkeit einen Flansch (24′) enthält, der einen aussermittigen Vorsprung (80) bildet und an der Schaltungsdurchtrittswelle (12) befestigt ist, sowie ein Potentiometer (87) oder eine entsprechende Vorrichtung zur Winkelmessung, die mit diesem Flansch gekoppelt ist, um zu bewirken, dass Einstellpositionsbereiche (I, II) des genannten Potentiometers den eventuellen Positionen der genannten Durchtrittswelle entsprechen.

2. Vorrichtung gemäss Anspruch 1, dadurch gekennzeichnet, dass das Gerät zur Feststellung der Beanspruchungsrichtung drei Kontaktstücke (21–23; 21′, 23′, 19′A; 51, 53, 54; 66, 67, 72) enthält, die an den beiden Abschnitten des Bruchelements so verteilt sind, dass sie einen Dreileiterschalter bilden.

3. Vorrichtung gemäss Anspruch 2, dadurch gekennzeichnet, dass das Bruchelement der oberhalb des Getriebe-Schaltgestänges angeordnete Schalthebel (11) ist.

4. Vorrichtung gemäss Anspruch 2, dadurch gekennzeichnet, dass es sich bei dem Bruchelement um ein Element handelt, welches eine Translationsbewegung ermöglicht und unmittelbar unterhalb des Schalthebels in dem Getriebe-Schaltgestänge angeordnet ist.

**Claims**

1. A device for detecting forces in a gearbox operating linkage (10) designed to control an automatic system for operating a clutch (15) associated with the said gearbox, in order to allow changes of gear ratio in the said gearbox, this linkage comprising a gear changing shaft (12) in the said gearbox, adapted to rotate between two limiting positions corresponding respectively to engagement of different gear ratios, and also, forming part of the said force detecting device, a deformable linkage element, called a broken element (11, 50, 60), movable between two limiting positions corresponding to the said limiting positions of the gear changing shaft and comprising two sections coupled together elastically by elastic returning means tending to bring them into a neutral configuration, the said force detecting device also comprising a speed parity detector adapted to assume a parity state representing the position of the gear changing shaft, which varies according to which of its two limiting positions this gear changing shaft is in, a force direction detector (21–23, 21′, 23′, 19′A; 51, 53, 54; 66, 67, 72) associated with the broken element (11, 50, 60) and adapted to assume a state representing the position of this broken element, which varies according to whether the broken element is moved in one or other of the two opposite reference directions, respectively corresponding to movement of this broken element from one to the other of its limiting positions and vice versa, and also a processor circuit (28), to which the parity detector and the force direction detector are connected, which is adapted to activate the automatic clutch operating system so as to disengage the latter when the broken element is moved in a direction suitable for moving the gear changing shaft to an unoccupied limiting position, this device being characterized in that the aforementioned parity detector comprises a flange (24′), forming an eccentric projection (80) fixed to the gear changing shaft (12), and a potentiometer (87) or analogous angle measuring means coupled to the said flange to make setting regions (I, II) of the said potentiometer correspond with possible positions of the said gear changing shaft.

2. A device according to Claim 1, characterized in that the force direction detector comprises three contact terminals (21–23; 21′, 23′, 19′A; 51, 53, 54; 66, 67, 72) distributed on the two sections of the broken element so as to constitute a three-contact switch.

3. A device according to Claim 2, characterized in that the broken element is the gear shift lever (11) disposed on the input side of the gearbox operating linkage.

4. A device according to Claim 2, characterized in that the broken element is an element movable in translation disposed immediately on the output side of the gear shift lever in the gearbox operating linkage.

*FIG.1*

*FIG.4*

2/4

FIG.2

FIG. 3

FIG. 5

FIG.6